# EUROPÄISCHE PATENTSCHRIFT

(11) **EP 2 487 380 B1**
(45) Veröffentlichungstag und Bekanntmachung des Hinweises auf die Patenterteilung: **01.05.2013**
(21) Anmeldenummer: 11001192.1
(22) Anmeldetag: 14.02.2011
(51) Int. Cl.: F16D 35/02

(54) **Flüssigkeitsreibungkupplung**
Fluid friction coupling
Couplage à friction de liquide

(43) Veröffentlichungstag der Anmeldung: 15.08.2012
(73) Patentinhaber: BorgWarner, Inc., Auburn Hills, MI 48326-2872 (US)
(72) Erfinder: Buchholz, Thomas, 78333 Stockach (DE)
(74) Vertreter: Schaeberle, Steffen

(56) Entgegenhaltungen:
- EP-A1- 1 621 787
- DE-A1- 3 714 086
- DE-A1- 19 749 342
- US-A- 5 433 304
- US-A- 6 026 943

## Beschreibung

Die Erfindung betrifft eine Flüssigkeitsreibungskupplung gemäß dem Oberbegriff des Anspruches 1.

Eine derartige Flüssigkeitsreibungskupplung ist aus der EP 1 731 787 B1 oder US 6026943 bekannt, deren Offenbarungsgehalt hiermit durch explizite Bezugnahme zum Offenbarungsgehalt vorliegender Anmeldung gemacht wird.

Es ist Aufgabe der vorliegenden Erfindung, eine Flüssigkeitsreibungskupplung der im Oberbegriff des Anspruches 1 angegebenen Art zu schaffen, mit der es auf einfache Art und Weise möglich ist, die Kupplungseffizienz zu steigern.

Die Lösung dieser Aufgabe erfolgt durch die Merkmale des Anspruchs 1.

Durch das Vorsehen eines drehbar gelagerten Vorlaufpumpenelementes, das mit dem Gehäuse einen Scherspalt definiert, wird es möglich gemacht, auf einfache Art und Weise durch Ausnutzung einer Differenzdrehzahl zwischen dem Pumpenelement und dem Gehäuse bzw. der Primärseite der Flüssigkeitsreibungskupplung einen variablen Volumenstrom von der Vorratskammer in die Arbeitskammer zu erzeugen.

Zu den besonderen Vorteilen der erfindungsgemäßen Flüssigkeitsreibungskupplung zählt zunächst, dass nur eine geringe Menge an Kupplungsflüssigkeit erforderlich ist, da aufgrund der zuvor erläuterten Anordnung eine aktive Förderpumpe im Ölreservoir gebildet wird, was hinsichtlich der Kupplungsflüssigkeitsmenge gegenüber dem bekannten Ausnutzen von Zentrifugalkräften zum Füllen der Arbeitskammer vorteilhaft ist.

Ferner wird das Ansprechverhalten der erfindungsgemäßen Flüssigkeitsreibungskupplung aufgrund des niedrigeren Kupplungsflüssigkeitsanteils schneller.

Es ergibt sich ferner eine äußerst kompakte Bauweise, da der Außendurchmesser der Vorratskammer bzw. des Reservoirs größer gemacht werden kann, als der Innendurchmesser der Arbeitskammer.

Zusammenfassend ist somit festzustellen, dass aufgrund des Umstandes, dass das Vorlaufpumpenelement mit Sekundärdrehzahl (Drehzahl der Welle bzw. des Wirkorgans) dreht und gegenüber dem Gehäuse Kupplungsflüssigkeit abstreift, eine hervorragende Kupplungsleistung erreichbar ist.

Die Unteransprüche haben vorteilhafte Weiterbildungen der Erfindung zum Inhalt.

Die Kupplungsleistung kann ferner dadurch verbessert werden, dass eine Rückförderpumpe vorgesehen ist, die mit Primärdrehzahl (Gehäusedrehzahl) dreht und aufgrund ihrer Anordnung benachbart zur Kupplungsscheibe gegenüber der Kupplungsscheibe Kupplungsflüssigkeit abstreift.

Weitere Einzelheiten, Vorteile und Merkmale der vorliegenden Erfindung ergeben sich aus nachfolgender Beschreibung von Ausführungsbeispielen anhand der Zeichnung. Es zeigt:

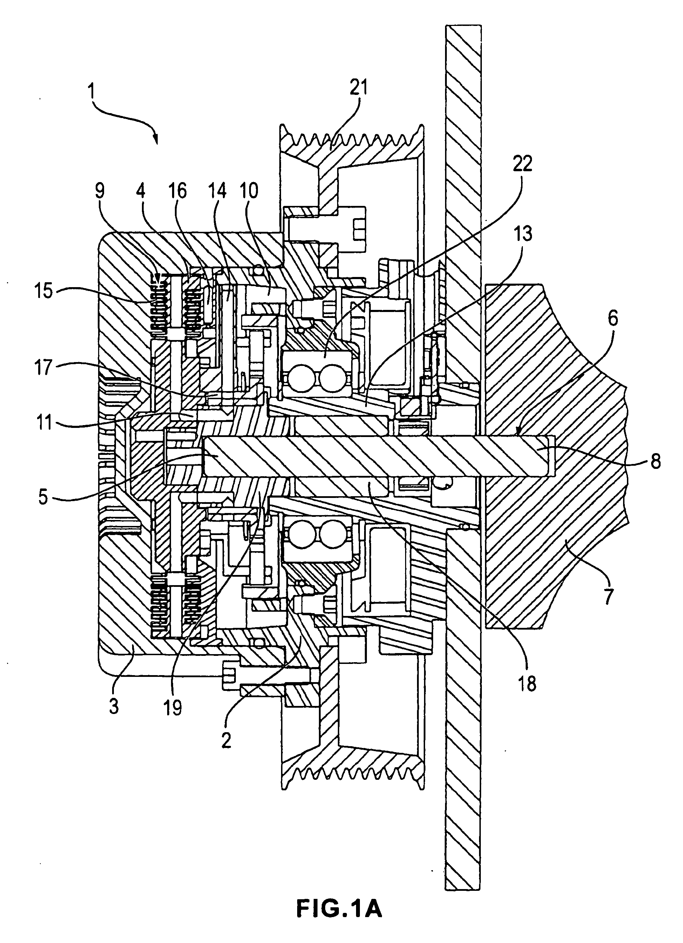

Fig.1A eine Schnittdarstellung einer erfindungsgemäßen Flüssigkeitsreibungskupplung, und

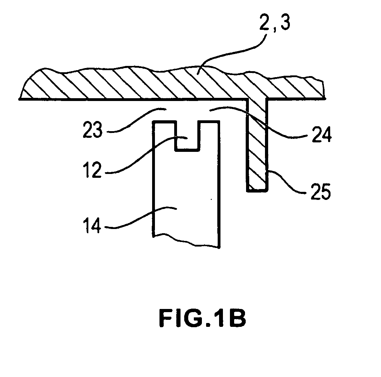

Fig. 1B eine schematisch stark vereinfachte Darstellung eines Teils eines Pumpenelements zur Erläuterung eines Scherspaltes.

In Fig. 1A ist eine Schnittdarstellung einer erfindungsgemäßen Flüssigkeitsreibungskupplung 1 dargestellt, die ein Gehäuse aufweist, das üblicherweise aus einem Gehäusekörper 2 und einem Deckel 3 aufgebaut ist.

Im Gehäuse 2, 3 ist eine Kupplungsscheibe 4 angeordnet, die gegenüber dem Gehäuse 2, 3 drehbar ist. Die Kupplungsscheibe 4 ist hierbei drehfest an einem Ende 5 einer zentral innerhalb des Gehäuses 2, 3 gelagerten Welle 6 angeordnet. Am anderen Ende 8 der Welle ist ein schematisch vereinfacht dargestelltes antreibbares Wirkorgan 7 fixiert, das beispielsweise als Pumpenrad oder als Lüfterrad ausgebildet sein kann. Eine Arbeitskammer 9 ist zwischen dem Gehäuse 2, 3 und der Kupplungsscheibe 4 angeordnet, die, wie aus Fig. 1A ersichtlich ist, Arbeitsspalte 15 aufweist, die aufgrund einer Scherwirkung auf die der Arbeitskammer 9 zugeführten Kupplungsflüssigkeit eine Drehmomentübertragung möglich machen.

Ferner ist eine Vorratskammer 10 für die genannte Kupplungsflüssigkeit vorgesehen, wobei ein Zuführkanal 11 von der Vorratskammer 10 zur Arbeitskammer 9 führt und damit den Vorlauf bildet.

Wie insbesondere aus Fig. 1A ersichtlich ist, ist ferner ein Rückpumpsystem bzw. eine Rückförderpumpe 16 vorgesehen, die zur Rückführung der Kupplungsflüssigkeit von der Arbeitskammer 9 zur Vorratskammer 10 dient. Wie sich aus der Figur ergibt, ist die Rückförderpumpe 16 benachbart zur Kupplungsscheibe 4 angeordnet. Die Rückförderpumpe 16 ist am Gehäuse 2, 3 angeordnet und dreht daher mit Primärdrehzahl. Durch die Anordnung der benachbarten Kupplungsscheibe 4 streift die Rückförderpumpe 16 somit gegenüber der Kupplungsscheibe Kupplungsflüssigkeit ab, was im Zusammenwirken mit einem nachfolgend zu beschreibenden Vorlaufpumpenelement 14 die Kupplungseffizienz der erfindungsgemäßen Flüssigkeitsreibungskupplung 1 erheblich verbessert.

Mit dem Gehäuse 2, 3 ist ferner ein Antriebsorgan 21, wie beispielsweise eine Riemenscheibe, verbunden. Die Flüssigkeitsreibungskupplung 1 weist ferner ein stationäres Kupplungsteil 13 auf, an dem über ein Hauptlager 22 das Gehäuse 2, 3 gelagert ist. Die Welle 6 ist über das Sekundärlager 18 auf dem stationären Kupplungsteil 13 gelagert.

Wie ferner Fig. 1A ferner zeigt, zeichnet sich die erfindungsgemäße Flüssigkeitsreibungskupplung 1 durch das Vorsehen eines Vorlaufpumpenelements 14 aus, das drehfest auf der Welle 6 gelagert ist und somit gegenüber dem Gehäuse 2, 3, nicht jedoch gegenüber der Welle 6 drehbar ist. Eine alternative Lagerung des Vorlaufpumpenelementes 14, beispielsweise am stationären Teil 13, ist jedoch ebenfalls grundsätzlich möglich.

Das Vorlaufpumpenelement 14 weist im dargestellten Beispielsfalle an seinem radialen Außenrand einen Scherspalt 12 auf, der gemäß der Detaildarstellung in Fig. 1B gegenüber dem Gehäuse 2, 3 über Dichtspalte 23 und 24 abgedichtet ist. Durch diese Anordnung wird eine variable Förderpumpe gebildet, die, wie eingangs bereits erläutert, aufgrund einer zu erzeugenden Differenzdrehzahl zwischen dem Vorlaufpumpenelement 14 und dem Gehäuse 2, 3 einen Volumenstrom von Kupplungsflüssigkeit von der Vorratskammer 10 zur Arbeitskammer 9 ermöglicht. Hierbei ist zu betonen, dass die in Fig. 1B in vergrößerter Darstellung gezeigte Anordnung nicht auf eine radiale Ausrichtung des Scherspalts 12 beschränkt ist. Ferner wäre auch eine axiale Realisierung des Scherspalts 12 zusammen mit entsprechenden Dichtspalten gegenüber dem axial benachbarten Gehäuseteil 25 denkbar.

Der Volumenstrom von der Vorratskammer 10 in die Arbeitskammer 9 wird durch das zuvor erläuterte Vorlaufpumpenelement 14 im Zusammenhang mit dem erläuterten Scherspalt 12 erzeugt. Das Vorlaufpumpenelement 14 und der Scherspalt 12 bilden hierbei eine variable Förderpumpe, deren Wirkprinzip auf der eingangs erläuterten Drehzahldifferenz beruht.

Wie Fig. 1A ferner zeigt, ist im Zuführkanal 11 ein Ventil 17 angeordnet, das zusammen mit dem mit Sekundärdrehzahl drehenden Vorlaufpumpenelement 14 den Zulauf in die Arbeitskammer 9 regelt. Das Ventil 17 kann hierbei mit einer an sich bekannten Betätigungseinrichtung betätigt werden, wie sie beispielsweise in der EP 1 045 163 B1 beschrieben ist, deren Inhalt hiermit zum Offenbarungsinhalt vorliegender Anmeldung gemacht wird.

Neben der schriftlichen Offenbarung der Erfindung wird hiermit explizit auf deren zeichnerische Darstellung in den Fig. 1A und 1B Bezug genommen.

### Bezugszeichenliste

- 1: Flüssigkeitsreibungskupplung
- 2, 3: Gehäuse (2: Gehäusekörper, 3: Deckel)
- 4: Kupplungsscheibe
- 5: Ende der Welle 6
- 6: Welle
- 7: Wirkorgan (z.B. Pumpenrad, Lüfterrad usw.)
- 8: zweites Ende der Welle 6
- 9: Arbeitskammer
- 10: Vorratskammer
- 11: Zuführkanal
- 12: Scherspalt
- 13: stationäres Kupplungsteil (Pumpengehäuse)
- 14: Vorlaufpumpenelement
- 15: Arbeitsspalte
- 16: Rückförderpumpe
- 17: Ventil
- 18: Sekundärlager
- 19: Ventilträger
- 21: Antriebsorgan, insbesondere Riemenscheibe am Gehäuse 2, 3
- 22: Hauptlager
- 23, 24: Dichtspalte
- 25: Gehäuseteil

## Patentansprüche

1. Flüssigkeitsreibungskupplung (1)
- mit einem Gehäuse (2, 3)
- mit einer Kupplungsscheibe (4),
■ die gegenüber dem Gehäuse (2, 3) drehbar ist, und
■ die drehbar an einem Ende (5) einer zentral innerhalb des Gehäuses (2, 3) gelagerten Welle (6) angeordnet ist, die an ihrem anderen Ende (8) ein antreibbares Wirkorgan (7) trägt;
- mit einer Arbeitskammer (9) zwischen dem Gehäuse (2, 3) und der Kupplungsscheibe (4);
- mit einer Vorratskammer (10) für Kupplungsflüssigkeit;
- mit einem Zuführkanal (11), der von der Vorratskammer (10) zur Arbeitskammer (9) führt; und
- mit einem stationären Kupplungsteil (13), gegenüber dem das Gehäuse (2, 3) drehbar ist,
**gekennzeichnet**
- **durch** ein gegenüber dem Gehäuse (2, 3) drehbares Vorlaufpumpenelement (14),
■ das drehfest auf der Welle (6) angeordnet ist, und
■ das mit dem Gehäuse (2, 3) einen Scherspalt (12) definiert; und
- **durch** ein Ventil (17), das im Zuführkanal (11) angeordnet ist.

2. Flüssigkeitsreibungskupplung nach Anspruch 1, **dadurch gekennzeichnet, dass** der Scherspalt (12) durch Dichtspalte (23, 24) gegenüber dem Gehäuse (2, 3) begrenzt ist.

3. Flüssigkeitsreibungskupplung nach Anspruch 1 oder 2, **gekennzeichnet durch** eine Rückförderpumpe (16) zur Rückführung von Kupplungsflüssigkeit von der Arbeitskammer (9) zur Vorratskammer (10).

4. Flüssigkeitsreibungskupplung nach Anspruch 3, **dadurch gekennzeichnet, dass** die Rückförderpumpe (16) benachbart zur Kupplungsscheibe (4) angeordnet ist.

## Claims

1. Liquid friction clutch (1)
- having a housing (2, 3),
- having a clutch disk (4)
■ which is rotatable relative to the housing (2, 3) and
■ which is rotatably arranged on an end (5) of a shaft (6) which is mounted centrally within the housing (2, 3), which shaft (6) bears on its other end (8) a driveable active element (7);
- having a working chamber (9) between the housing (2, 3) and the clutch disk (4);
- having a storage chamber (10) for clutch fluid;
- having a supply duct (11) which leads from the storage chamber (10) to the working chamber (9); and
- having a stationary clutch part (13) relative to which the housing (2, 3) is rotatable,
**characterized**
- **by** a supply pump element (14) which is rotatable relative to the housing (2, 3),
■ which supply pump element is rotationally fixedly arranged on the shaft (6) and
■ which supply pump element, with the housing (2, 3), defines a shear gap (12); and by a valve (17) which is arranged in the supply duct (11).

2. Liquid friction clutch according to Claim 1, **characterized in that** the shear gap (12) is delimited with respect to the housing (2, 3) by sealing gaps (23, 24).

3. Liquid friction clutch according to Claim 1 or 2, **characterized by** a return feed pump (16) for returning clutch fluid from the working chamber (9) to the storage chamber (10).

4. Liquid friction clutch according to Claim 3, **characterized in that** the return feed pump (16) is arranged adjacent to the clutch disk (4).

## Revendications

1. Embrayage à friction de liquide (1), comprenant :
- un boîtier (2, 3)
- un disque d'embrayage (4),
* qui peut tourner par rapport au boîtier (2, 3), et
* qui est disposé à rotation à une extrémité (5) d'un arbre (6) supporté centralement à l'intérieur du boîtier (2, 3), lequel arbre porte à son autre extrémité (8) un organe fonctionnel entraînable (7) ;
- une chambre de travail (9) entre le boîtier (2, 3) et le disque d'embrayage (4) ;
- une chambre de réserve (10) pour le liquide d'embrayage ;
- un canal d'amenée (11) qui va de la chambre de réserve (10) à la chambre de travail (9) ; et
- une partie d'embrayage stationnaire (13), par rapport à laquelle le boîtier (2, 3) peut tourner,
**caractérisé par**
- un élément de pompe d'alimentation (14) pouvant tourner par rapport au boîtier (2, 3),
* qui est disposé de manière solidaire en rotation sur l'arbre (6), et
* qui définit avec le boîtier (2, 3) une fente de cisaillement (12) ; et
- une soupape (17) qui est disposée dans le canal d'amenée (11).

2. Embrayage à friction de liquide selon la revendication 1, **caractérisé en ce que** la fente de cisaillement (12) est limitée par des fentes d'étanchéité (23, 24) par rapport au boîtier (2, 3) .

3. Embrayage à friction de liquide selon la revendication 1 ou 2, **caractérisé par** une pompe de refoulement (16) pour refouler le liquide d'embrayage de la chambre de travail (9) à la chambre de réserve (10).

4. Embrayage à friction de liquide selon la revendication 3, **caractérisé en ce que** la pompe de refoulement (16) est disposée à côté du disque d'embrayage (4).
